# FASCICULE DE BREVET EUROPEEN

(11) **EP 0 982 174 B1**
(45) Date de publication et mention de la délivrance du brevet: **23.12.2015**
(21) Numéro de dépôt: 99402094.9
(22) Date de dépôt: 20.08.1999
(51) Int. Cl.: B60L 11/18, B60L 7/04

(54) **Dispositif perfectionné d'alimentation en courant électrique de moteurs de traction de véhicules urbains ou suburbains**
Verbesserte Anordnung zur Stromversorgung Antriebsmotoren für Nahverkehrfahrzeuge
Improved device for supplying current to urban or suburban vehicles traction motors

(30) Priorité: 28.08.1998 FR 9810828
(43) Date de publication de la demande: 01.03.2000
(73) Titulaire: ALSTOM Transport Technologies, 92300 Levallois-Perret (FR)
(72) Inventeur: Decottignies, Pierre, 59960 Neuville-en-Ferrain (FR)
(74) Mandataire: Jacobson, Claude

(56) Documents cités:
- DE-A- 3 635 782
- DE-C- 605 232
- US-A- 3 800 197
- US-A- 4 859 921
- US-A- 5 331 258

## Description

La présente invention est relative aux dispositifs d'alimentation en courant électrique de moteurs de traction de véhicules urbains ou suburbains et se rapporte plus particulièrement aux dispositifs à hacheur de courant.

Dans les dispositifs de ce type, on fait appel pour faire fonctionner les moteurs électriques soit en traction, soit en freinage, à des interrupteurs électromécaniques tels que des contacteurs ou à des interrupteurs statiques tels que des thyristors, la mise en oeuvre de tous ces moyens de commutation nécessitant l'emploi de circuits de commutation forcée ou bien dans le cas des circuits à thyristors, leur commande étant subordonnée à l'attente que le courant des thyristors soit inférieur à leur courant hypostatique de maintien.

Dans tous les cas, il y a discontinuité de courant, ce qui constitue un inconvénient non négligeable des dispositifs connus.

Le document DE 36 35 782 divulgue un dispositif d'alimentation en courant électrique d'eu moins un moteur à excitation série, du type comportant un hacheur comprenant un point milieu relié à l'induit du moteur et auquel sont connectés au moins un premier interrupteur statique commandé connecté par ailleurs à une source de tension, d'application au moteur électrique d'un courant d'alimentation, en traction et au moins un second interrupteur statique commandé, relié par ailleurs à la masse, de fermeture d'un circuit de liaison avec une charge pour le moteur fonctionnant en génératrice lors d'un freinage et des moyens de commutation à diodes polarisés en sens inverse pour permettre respectivement le passage dans un premier sens du courant d'alimentation du moteur délivré par le premier interrupteur statique commandé, lors de la conduction de celui-ci et le passage dans un second sens du courant délivré au circuit de liaison avec la charge par le moteur fonctionnant en génératrice à travers le second interrupteur statique commandé lors de la conduction de celui-ci.

Par ailleurs, le document DE 605232 enseigne un montage dans lequel le point commun du hacheur est connecté à au moins un moteur à excitation série monté dans une première branche, comprenant un induit et un inducteur dudit moteur et les moyens de commutation à diodes associés et à au moins un moteur à excitation série monté dans une seconde branche connectée en parallèle avec la première branche et comprenant un induit et un inducteur dudit moteur et les moyens de commutation à diodes associés, la charge pour lesdits moteurs fonctionnant en génératrices étant commune à la première et à la seconde branches

L'invention vise à créer un dispositif d'alimentation du type précité, intégrant le montage précédent et présentant une amélioration des moyens de commutation à diodes polarisées en sens inverse pour permettre une commutation traction-freinage des moteurs à excitation série de façon intégralement statique et naturelle.

L'inversion est définie par les revendications.

L'invention sera mieux comprise à l'aide de la description qui va suivre, donnée uniquement à titre d'exemple et faite en se référant aux dessins annexés, sur lesquels :
- la Fig.1 est un schéma électrique d'un dispositif d'alimentation de moteurs électriques à excitation série du type à hacheur de courant bidirectionnel suivant l'invention;
- la Fig.2 est un schéma électrique du dispositif d'alimentation de la figure 1 fonctionnant en traction; et
- la Fig.3 est un schéma électrique du dispositif d'alimentation de la figure 1 fonctionnant en freinage.

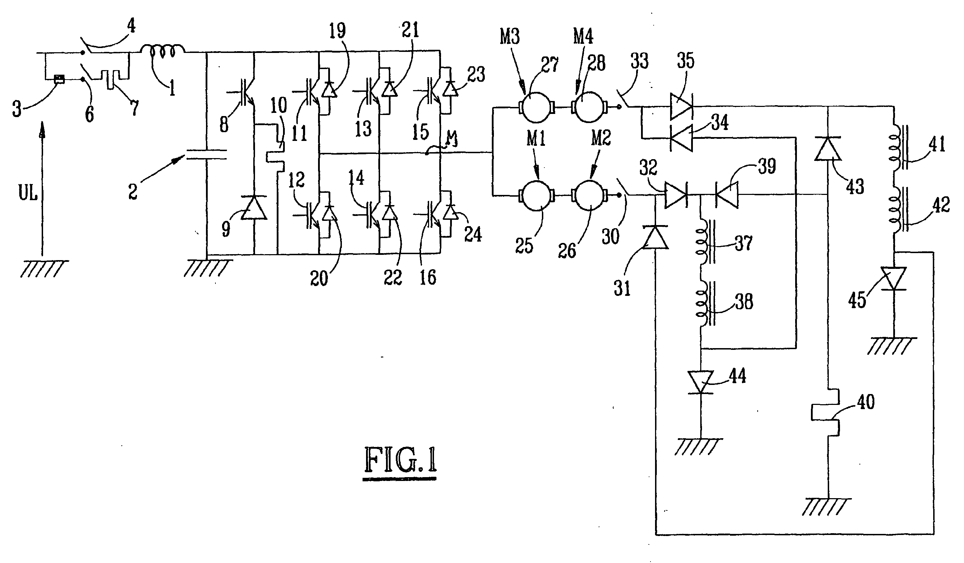

Le dispositif d'alimentation représenté à la figure 1 comporte une inductance 1 connectée en série avec un condensateur 2 aux bornes d'une source de tension continue d'alimentation UL par l'intermédiaire d'un circuit parallèle 3 comprenant un disjoncteur 4 aux bornes duquel sont connectés en série un fusible 5, un interrupteur de protection 6 et une résistance 7.

Aux bornes du condensateur 2 sont connectés en série un interrupteur à transistor bipolaire à grille isolée ou IGBT 8 et une diode 9 reliée au trajet émetteur-collecteur de l'interrupteur IGTB 8.

En parallèle, sur la diode 9 est connectée un rhéostat 10.

Aux bornes du condensateur 2 sont en outre connectés en parallèle trois groupes de deux interrupteurs IGTB 11,12,13,14,15 et 16, les trajets collecteur-émetteur des transistors de chaque groupe étant connectés en série.

En parallèle, sur les trajets émetteur-collecteur des transistors IGBT sont connectées des diodes respectives 19,20,21,22,23,24, les cathodes desdites diodes étant connectées aux collecteurs des transistors associés.

Les points de jonction des émetteurs des interrupteurs 19,21,23 avec les collecteurs des interrupteurs 20,22,24 forment le point milieu du hacheur et sont connectés ensemble à des premières bornes de deux induits 25,27 d'un premier et d'un troisième moteurs électriques M1, M3.

Les induits 25,27 sont branchés chacun en série avec un induit respectif 26,28 d'un second et d'un quatrième moteurs électriques M2, M4.

Le circuit constitué par les interrupteurs 11,13,15 et leurs diodes 19,21,23 associées et par les interrupteurs 12,14,16 et leurs diodes 20,22,24 associées, les interrupteurs 11,13,15 et 12,14,16 ayant des bornes communes connectées aux induits 25,26 et 27,28 des moteurs électriques M1 à M4, forment un hacheur à point milieu M d'alimentation desdits moteurs.

Selon la puissance demandée au hacheur, celui-ci peut ne comporter que deux ou un interrupteur IGBT connecté de chaque côté du point milieu M.

La borne de l'induit 26 du moteur M2 opposée à l'induit 25 du moteur M1 est connectée par l'intermédiaire d'un contacteur d'isolement 30 à la cathode d'une diode 31 et à l'anode d'une diode 32.

De même, la borne de l'induit 28 du moteur M4 opposée à l'induit 27 du moteur M3 est connectée par l'intermédiaire d'un contacteur d'isolement 33 à la cathode d'une diode 34 et à l'anode d'une diode 35.

La cathode de la diode 32 est connectée d'une part, aux inducteurs 37,38 des moteurs M1,M2 reliés en série et d'autre part, à la cathode d'une diode 39 reliée par son anode à une résistance 40 de limitation du courant de défaut en freinage.

La cathode de la diode 35 est connectée d'une part aux inducteurs 41,42 des moteurs M3,M4 reliés en série et d'autre part, à la cathode d'une diode 43 reliée par son anode à la résistance 40 de limitation du courant de défaut en freinage.

La borne de l'inducteur 38 du moteur M2 opposée à l'inducteur 37 du moteur M1 est connectée à l'anode d'une diode 44 dont la cathode est reliée à la masse ainsi qu'à l'anode de la diode 34 dont la cathode est reliée au contacteur d'isolement 33 des induits 27 et 28 des moteurs M3 et M4.

La borne de l'inducteur 42 du moteur M4 opposée à l'inducteur 44 du moteur M3 est connectée à l'anode d'une diode 45 dont la cathode est reliée à la masse ainsi qu'à l'anode de la diode 31 reliée par sa cathode au contacteur d'isolement 30 des induits 25 et 26 des moteurs M1 et M2.

On voit donc que les diodes 32 et 44 reliant les induits 25,26 des moteurs M1,M2 à leurs inducteurs 37,38 et les diodes 35 et 45 reliant les induits 27,28 des moteurs M3,M4 à leurs inducteurs 41,42, ces diodes étant polarisées dans un premier sens, assurent le fonctionnement des moteurs en traction lorsque les interrupteurs IGBT 11,13,15 sont conducteurs et les interrupteurs IGBT 12,14,16 sont bloqués.

Par ailleurs, les diodes 31 et 43 reliant les induits 25 et 26 des moteurs M1,M2 aux inducteurs 41,42 des moteurs M3,M4 et les diodes 34 et 39 reliant les induits 27,28 des moteurs M3,M4 aux inducteurs 37,38 des moteurs M1,M2 et à la résistance de limitation 40, ces diodes étant polarisées dans un sens opposé au sens de polarisation des diodes 32,44,35,45, assurent le fonctionnement des moteurs en freinage lorsque les interrupteurs IGBT 12,14,16 sont conducteurs et les interrupteurs IGBT 11,13,15 sont bloqués.

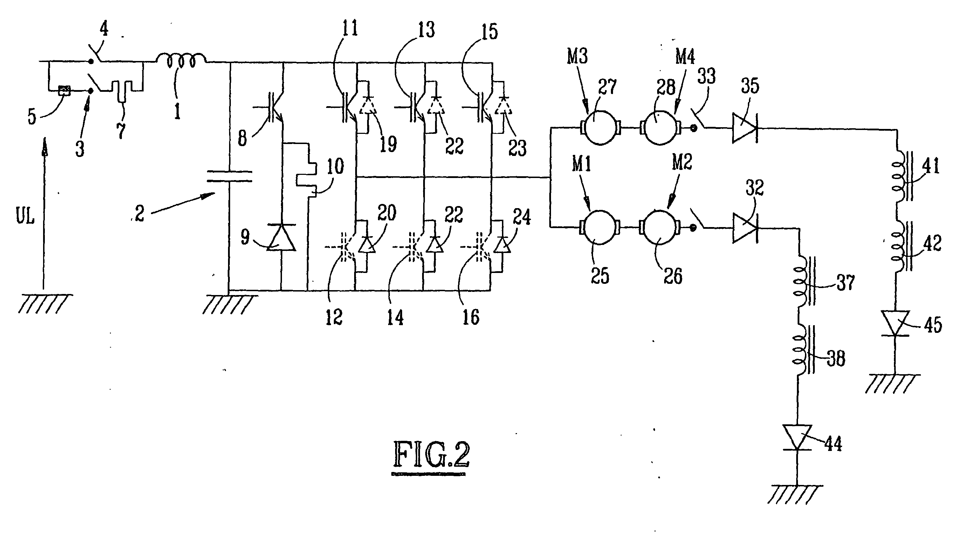

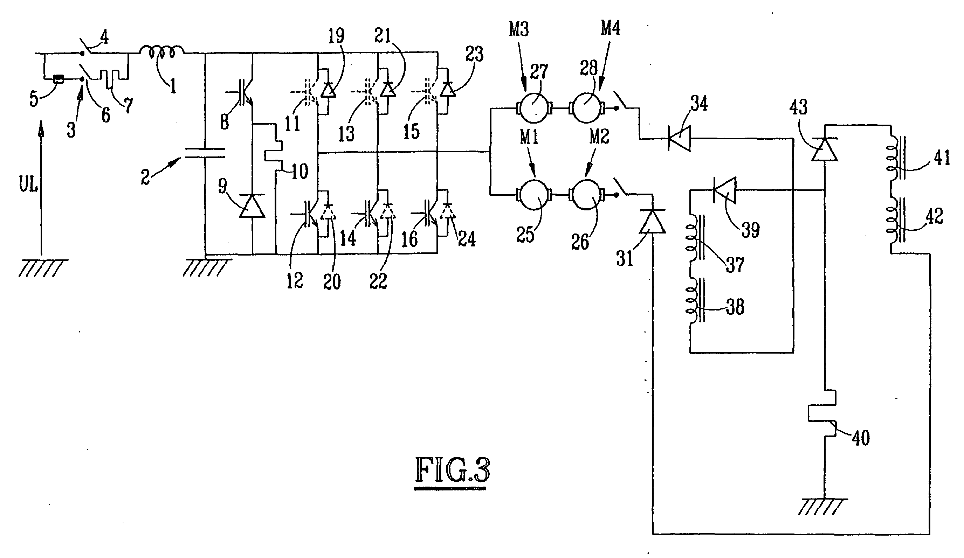

Le fonctionnement du hacheur bidirectionnel décrit en référence à la figure 1 va être décrit en référence aux figures 2 et 3 sur lesquelles ne sont représentés que les composants intervenant respectivement dans le fonctionnement en traction et en freinage.

Les interrupteurs IGBT 11,13,15 sont commandés en traction. Le rapport cyclique de la conduction de ces interrupteurs varie entre 0 et 1.

Les interrupteurs IGBT 12,14,16 sont commandés en freinage. Le rapport cyclique de la conduction de ces interrupteurs varie entre 0 et 1.

Les moteurs M1,M2,M3,M4 sont connectés en série-parallèle et sont supposés équiper deux par deux les bogies à deux moteurs d'une motrice de véhicule urbain ou suburbain.

Dans le cas de l'utilisation de bogies à un moteur, le schéma compoterait deux moteurs commutés en parallèle. On notera également que l'invention s'applique aussi à l'alimentation d'un moteur unique.

En fonction des interrupteurs IGBT 11,13,15 ou 12,14,16 commandés, les moteurs sont connectés naturellement en traction ou en freinage grâce aux diodes 32,44,35,45 et 31,34,43,39 respectivement.

Lorsque le hacheur fonctionne en traction, son schéma est celui de la figure 2.

Les interrupteurs IGBT 11,13 et 15 sont rendus conducteurs tandis que les interrupteurs IGBT 12,14,16 sont bloqués comme le montre la figure 2 sur laquelle les interrupteurs 12,14,16 sont représentés en traits discontinus.

Les diodes 20,22,24 connectées aux bornes des trajets émetteur-collecteur des interrupteurs 12,14,16 font fonction de diodes de roue libre. Les diodes 19,21,23 associées aux interrupteurs 11,13,15 conducteurs n'interviennent pas et sont de ce fait représentées en pointillés.

Le hacheur ainsi configuré alimente les moteurs de traction M1 à M4.

Les induits 25,26 des moteurs M1,M2 sont connectés naturellement en série avec leurs inducteurs 37,38 par l'intermédiaire des diodes 32 et 44.

Les induits 27,28 des moteurs M3,M4 sont connectés naturellement en série avec leurs inducteurs 41,42 par l'intermédiaire des diodes 35,45.

Lorsque le hacheur fonctionne en freinage, son schéma est celui de la figure 3.

Les interrupteurs IGBT 12,14,16 sont rendus conducteurs et les diodes 19,21,23 associées aux interrupteurs 11,13,15 bloqués, représentés en trait discontinu font fonction de diodes de roue libre.

Les diodes 20,22,24 associées aux interrupteurs 12,14,16 sont inopérantes et sont de ce fait, représentées en pointillés.

Le hacheur ainsi configuré alimente les moteurs de traction M1 à M4 pour les faire fonctionner en génératrices. Les induits 25,26 des moteurs M1,M2 sont connectés naturellement en série avec les inducteurs 41,42 des moteurs M3,M4 par l'intermédiaire des diodes 31,43 et avec la résistance 40 de limitation de courant de défaut en freinage qui fait office de charge pour les moteurs fonctionnant en génératrice.

Les induits 27,28 des moteurs M3,M4 sont connectés naturellement en série avec les inducteurs 37,38 des moteurs M1,M2 par l'intermédiaire des diodes 34,39 et avec la résistance 40 de limitation de courant de défaut en freinage.

Le croisement des inducteurs par rapport aux induits des moteurs M1,M2 e M3,M4 est rendu nécessaire pour assurer la stabilité du fonctionnement en freinage des branches des moteurs connectées en parallèle.

Les contacteurs d'isolement 30,33 sont toujours fermés quel que soit le mode de fonctionnement en traction ou en freinage, ainsi que pendant les transitions entre ces deux modes.

Le rôle de ces contacteurs est de contrôler le courant de défaut en freinage en association avec la résistance 40 de limitation du courant de défaut en freinage.

Ces contacteurs isolent également les induits des inducteurs des moteurs M1 à M4, en cas de mise hors service de la motrice équipée d'un tel système et de son remorquage.

L'agencement qui vient d'être décrit permet une commutation du mode de traction au mode freinage des moteurs à excitation série qui est intégralement statique et naturelle.

Il suffit de commuter le hacheur d'alimentation soit en traction, soit en freinage.

Par ailleurs, le hacheur suivant l'invention offre un certain nombre d'avantages.

Dans le domaine de la rénovation des équipements de traction, il exploite d'une manière optimale, les caractéristiques des moteurs à excitation série.

D'un point de vue industriel, l'avantage principal d'un dispositif hacheur de courant suivant l'invention est de permettre la réutilisation à l'identique de montages de puissance d'onduleurs MLI standard pour réaliser la fonction hacheur de courant.

A cet effet, on court-circuite les trois phases de sortie et on pilote les trois interrupteurs 11,13,15 en traction et les trois interrupteurs 12,14,16 en freinage et on associe aux interrupteurs de traction et de freinage, le dispositif de commutation traction-freinage à diodes.

Enfin, le dispositif d'alimentation à hacheur de courant bidirectionnel suivant l'invention comporte une seule résistance 40 de limitation du courant de défaut en freinage pour les deux groupes de moteurs électriques M1,M2 et M3,M4.

Cette résistance est commutée naturellement dans le circuit de freinage par les diodes 39 et 43.

## Revendications

1. Dispositif d'alimentation en courant électrique d'au moins un moteur (M1, M2, M3, M4) à excitation série, comportant :
- un hacheur (11, 13, 15, 12, 14, 16) comprenant un point milieu (M) relié à l'inducteur dudit moteur et auquel sont connectés :
- au moins un premier interrupteur statique commandé (11, 13, 15) connecté par ailleurs à une source de tension pour appliquer audit au moins un moteur électrique (M1, M2, M3, M4) un courant d'alimentation en traction, et
- au moins un second interrupteur statique commandé (12, 14, 16), relié par ailleurs à la masse pour fermer un circuit de liaison raccordant une charge (40) au moteur (M1, M2, M3, M4) fonctionnant en génératrice lors d'un freinage, et
- des moyens de commutation à diodes polarisés en sens inverse (32, 44, 35, 45, 31, 43, 34, 39) pour permettre respectivement :
- le passage dans un premier sens du courant d'alimentation du moteur (M1, M2, M3, M4) délivré par le ou chaque premier interrupteur statique commandé (11, 13, 15), lors de la conduction de celui-ci, et
- le passage dans un second sens du courant délivré à une charge (40) d'un circuit de liaison (40) par le moteur fonctionnant en génératrice, à travers ledit second interrupteur statique commandé (12, 14, 16) lors de la conduction de celui-ci
**caractérisé en ce que** le point commun (M) du hacheur est connecté à au moins un moteur à excitation série (M1,M2) monté dans une première branche, comprenant un induit (25, 26) et un inducteur (37, 38) dudit moteur et les moyens de commutation à diodes (32, 44, 31,43) associés, et à au moins un moteur à excitation série (M3, M4) monté dans une seconde branche connectée en parallèle avec la première branche et comprenant un induit (27, 28) et un inducteur (41,42) dudit moteur et les moyens de commutation à diodes (35, 45, 34, 39) associés, la charge (40) pour lesdits moteurs fonctionnant en génératrices étant commune à la première et à la seconde branches,
et **en ce que** les moyens de commutation à diodes polarisées dans un second sens comprennent deux troisièmes diodes (31, 34) connectées, respectivement, entre l'induit (25, 26, 27, 28) d'un moteur (M1, M2) disposé dans une branche et l'inducteur (41,42,37,38) du moteur (M2, M3) disposé dans l'autre branche et deux quatrièmes diodes (43, 39) interposées, respectivement, entre les inducteurs des deux moteurs et la charge (40), lesdites troisièmes et quatrièmes diodes (31, 34, 43, 39) étant polarisées pour conduire le courant de freinage délivré par les moteurs fonctionnant en génératrice lors de la conduction du second interrupteur statique commandé (12,14,16), le premier interrupteur statique commandé (11,13,15) étant bloqué.

2. Dispositif d'alimentation suivant la revendication 1, **caractérisé en ce que** lesdits premier et second interrupteurs statiques commandés (11, 13, 15, 12, 14, 16) sont des interrupteurs formés par des transistors bipolaires à grille isolée IGBT.

3. Dispositif d'alimentation suivant la revendication 1 ou la revendication 2, **caractérisé en ce que** les moyens de commutation à diodes polarisés dans un premier sens comprennent deux premières diodes (32, 35) connectées, respectivement, entre l'induit (25, 26, 27, 28) et l'inducteur (37, 41, 42) associé d'un moteur (M1,M2,M3,M4), et deux secondes diodes (44, 45) connectées, respectivement, entre lesdits inducteurs (38, 42) et la masse, lesdits premières et secondes diodes (32, 35, 44, 45) étant polarisées pour conduire le courant d'alimentation des moteurs délivré par ledit premier interrupteur statique commandé (11, 13, 15) lors de sa conduction, le second interrupteur statique commandé (12, 14, 16) étant bloqué.

4. Dispositif d'alimentation suivant l'une quelconque des revendications 1 à 3, **caractérisé en ce que** le hacheur comporte connectés à son point milieu (M), plusieurs premiers interrupteurs statiques commandés (11, 13, 15) pour appliquer audit au moins deux moteurs électriques (M1, M2, M3, M4) un courant d'alimentation en traction et autant de seconds interrupteurs statiques commandés (12, 14, 16) pour fermer le circuit de liaison raccordant la charge (40) aux moteurs (M1, M2, M3, M4) fonctionnant en génératrice lors d'un freinage.

## Patentansprüche

1. Vorrichtung zur Versorgung mindestens eines Reihenschlussmotors (M1, M2, M3, M4) mit elektrischem Strom, aufweisend:
- einen Gleichspannungswandler (11, 13, 15, 12, 14, 16) aufweisend einen Mittelpunkt (M), welcher mit dem Induktor des Motors verbunden ist, und mit dem verbunden sind:
- mindestens ein erster gesteuerter statischer Schalter (11,13,15), welcher außerdem mit einer Spannungsquelle zum Anlegen einer Antrieb-Stromversorgung auf den elektrischen Motor (M1, M2, M3, M4) verbunden ist, und
- mindestens ein zweiter gesteuerter statischer Schalter (12,14,16), welcher außerdem mit der Masse verbunden ist, um eine Verbindungsschaltung zu schließen, welche eine Last (40) an den Motor (M1, M2, M3, M4) anschließt, welcher beim Bremsen im Generatorbetrieb arbeitet, und
- Mittel zum Umschalten von in Sperrrichtung gepolten Dioden (32, 44, 35, 45, 31, 43, 34, 39), um jeweils zu ermöglichen:
- das Fließen des Stroms in einer ersten Richtung zur Versorgung des Motors (M1, M2, M3, M4), welcher durch den oder jeden ersten gesteuerten elektronischen Schalter (11, 13, 15) zugeführt wird, wenn er leitet, und
- das Fließen des Stroms in einer zweiten Richtung, welcher der Last (40) einer Verbindungsschaltung (40) durch den Motor zugeführt wird, welcher im Generatorbetrieb arbeitet, durch den zweiten gesteuerten statischen Schalter (12, 14, 16), wenn er leitet,
**dadurch gekennzeichnet, dass** der Mittelpunkt (M) des Gleichspannungswandlers verbunden ist mit mindestens einem Reihenschlussmotor (M1, M2), welcher in einem ersten Zweig angeordnet ist, welcher einen Anker (25, 26) und einen Induktor (37, 38) des Motors und die Mittel zum Umschalten der assoziierten Dioden aufweist, und mit mindestens einem Reihenschlussmotor (M2, M3), welcher in einem zweiten Zweig angeordnet ist, welcher parallel zu dem ersten Zweig geschaltet ist, und welcher einen Anker (27, 28) und einen Induktor (41, 42) des Motors und die Mittel zum Umschalten der assoziierten Dioden (35, 45, 34, 39) aufweist, wobei die Last (40) für diese Motoren, welche im Generatorbetrieb arbeitet, eine gemeinsame Last für den ersten und den zweiten Zweig ist,
und dass die Mittel zum Umschalten von in einer zweiten Richtung gepolten Dioden zwei dritte Dioden (31, 34), welche jeweils zwischen dem Anker (25, 26, 27, 28) eines in einem Zweig angeordneten Motors (M1, M2) und dem Induktor (41, 42, 37, 38) eines in dem anderen Zweig angeordneten Motors (M3, M4) geschaltet sind und zwei vierte Dioden (43, 39), welche jeweils zwischen den Induktoren der zwei Motoren und der Last (40) angeordnet sind, aufweisen, wobei die dritte Diode und die vierte Diode (31, 34, 43, 39) gepolt sind, um den Bremsstrom zu leiten, welcher durch die im Generatorbetrieb arbeitenden Motoren hervorgerufen wird, wenn der zweite statische gesteuerte Schalter (12, 14, 16) leitet und der erste statische gesteuerte Schalter (11, 13, 15) offen ist.

2. Vorrichtung zur Versorgung nach Anspruch 1, **dadurch gekennzeichnet, dass** der erste und der zweite statische gesteuerte Schalter (11, 13, 15, 12, 14, 16) Schalter sind, welche als Bipolar-Transistoren mit isolierter Gate-Elektrode IGBT ausgestaltet sind.

3. Vorrichtung zur Versorgung nach Anspruch 1 oder Anspruch 2, **dadurch gekennzeichnet, dass** die Mittel zum Umschalten von Dioden, welche in einer ersten Richtung gepolt sind, zwei erste Dioden (32, 35), welche jeweils zwischen dem Anker (25, 26, 27, 28) und dem mit einem Motor (M1, M2, M3, M4) assoziierten Induktor (37, 41, 42) geschaltet sind, und zwei zweite Dioden (44, 45), welche jeweils zwischen den Induktoren (38, 42) und der Masse geschaltet sind, aufweisen, wobei die erste und die zweite Diode (32, 35, 44, 45) gepolt sind, um den Strom zur Versorgung der Motoren zu leiten, welcher durch den ersten statischen gesteuerten Schalter (11, 13, 15) hervorgerufen wird, wenn er leitet, wobei der zweite statische gesteuerte Schalter (12, 14, 16) offen ist.

4. Vorrichtung zur Versorgung nach einem der vorhergehenden Ansprüche 1 bis 3, **dadurch gekennzeichnet, dass** der Gleichspannungswandler mehrere erste statische gesteuerte Schalter (11, 13, 15) zum Anlegen einer Antrieb-Stromversorgung an den elektrischen Motor (M1, M2, M3, M4) und genauso viel zweite statische gesteuerte Schalter (12, 14, 16) zum Schließen der Verbindungsschaltung, welche die Last (40) an die Motoren (M1, M2, M3, M4) anschließt, welche während eines Bremsens im Generatorbetrieb arbeitet, aufweist.

## Claims

1. Device for supplying at least one series-excitation motor (M1, M2, M3, M4) with electric current, comprising
- a chopper (11, 13, 15, 12, 14, 16) having a mid-point (M) linked to the field coil of said motor and to which there are connected:
- at least one first controlled static switch (11, 13, 15) further connected to a voltage source for applying to said at least one electric motor (M1, M2, M3, M4) a supply current during traction and
- at least one second controlled static switch (12, 14, 16) further linked to ground for closing a linking circuit connecting a load (40) to the motor (M1, M2, M3, M4) when operating as a generator during braking, and
- switching means comprising reverse-biased diodes (32, 44, 35, 45, 31, 43, 34, 39) for allowing, respectively:
- the supply current of the motor (M1, M2, M3, M4) delivered by the or each first controlled static switch (11, 13, 15) to pass in a first direction when said first switch is conducting and
- the current delivered to a load (40) of a linking circuit (40) by the motor when operating as a generator to pass in a second direction through said second controlled static switch (12, 14, 16) when said second switch is conducting,
**characterised in that** the common point (M) of the chopper is connected to at least one series-excitation motor (M1, M2) installed in a first branch, comprising a rotor (25, 26) and a field coil (37, 38) of said motor and the associated switching means comprising diodes (32, 44, 31, 43), and to at least one series-excitation motor (M3, M4) installed in a second branch connected in parallel with the first branch and comprising a rotor (27, 28) and a field coil (41, 42) of said motor and the associated switching means comprising diodes (35, 45, 34, 39), the load (40) for said motors when operating as generators being common to the first and second branches;
and **in that** the switching means comprising diodes biased in a second direction comprise two third diodes (31, 34) connected, respectively, between the rotor (25, 26, 27, 28) of a motor (M1, M2) arranged in one branch and the field coil (41, 42, 37, 38) of the motor (M2, M3) arranged in the other branch and two fourth diodes (43, 39) interposed, respectively, between the field coils of the two motors and the load (40), said third and fourth diodes (31, 34, 43, 39) being biased to conduct the braking current delivered by the motors operating as generators when the second controlled static switch (12, 14, 16) is conducting, the first controlled static switch (11, 13, 15) being off.

2. Supply device according to claim 1, **characterised in that** said first and second controlled static switches (11, 13, 15, 12, 14, 16) are switches formed by insulated-gate bipolar transistors IGBTs.

3. Supply device according to claim 1 or claim 2, **characterised in that** the switching means comprising diodes biased in a first direction comprise two first diodes (32, 35) connected, respectively, between the rotor (25, 26, 27, 28) and the associated field coil (37, 41, 42) of a motor (M1, M2, M3, M4) and two second diodes (44, 45) connected, respectively, between said field coils (38, 42) and ground, said first and second diodes (32, 35, 44, 45) being biased to conduct the supply current of the motors delivered by said first controlled static switch (11, 13, 15) when it is conducting, the second controlled static switch (12, 14, 16) being off.

4. Supply device according to any one of claims 1 to 3, **characterised in that** the chopper comprises, connected to its mid-point (M), a plurality of first controlled static switches (11, 13, 15) for applying to said at least two electric motors (M1, M2, M3, M4) a supply current during traction and the same number of second controlled static switches (12, 14, 16) for closing the linking circuit connecting the load (40) to the motors (M1, M2, M3, M4) when operating as generators during braking.
